# EUROPÄISCHE PATENTSCHRIFT

(11) **EP 0 617 273 B1**
(45) Veröffentlichungstag und Bekanntmachung des Hinweises auf die Patenterteilung: **16.10.2002**
(21) Anmeldenummer: 94103973.7
(22) Anmeldetag: 15.03.1994
(51) Int. Cl.: G01N 21/55, G02B 6/12, G01N 21/77

(54) **Optisches Verfahren und Vorrichtung zur Analyse von Substanzen an Sensoroberflächen**
Optical method and device for analyzing substances on sensor surfaces
Procédé et dispositif optique pour l'analyse de substances sur des surfaces de capteurs

(30) Priorität: 26.03.1993 CH 92793
(43) Veröffentlichungstag der Anmeldung: 28.09.1994
(73) Patentinhaber: F. HOFFMANN-LA ROCHE AG, 4002 Basel (CH)
(72) Erfinder: Fattinger, Christof, CH-4249 Blauen (CH)
(74) Vertreter: Jung, Michael, Dr.

(56) Entgegenhaltungen:
- EP-A- 0 455 067
- EP-A- 0 482 377
- WO-A-86/07149
- WO-A-89/07756
- WO-A-89/09394
- WO-A-91/10122
- WO-A-93/01487
- DE-A- 3 723 159
- DE-C- 4 228 853
- SPIE, 5TH EUROPEAN CONFERENCE ON INTEGRATED OPTICS, Bd. 1141, 1989 Seiten 192-200, XP 000088970 W. LUKOSZ ET AL.
- APPLIED PHYSICS LETTERS, Bd. 62, Nr. 13, 29.März 1993 NEW YORK US, Seiten 1460-1462, XP 000355154 C. FATTINGER 'The bidiffractive grating coupler'

## Beschreibung

Die Erfindung betrifft ein Verfahren zur Messung der Ausbreitungseigenschaften optischer Oberflächenwellen. Das Verfahren eignet sich zum Nachweis und zur Charakterisierung von Molekülen an Sensoroberflächen mit Hilfe von optischen Oberflächenwellen. Die Erfindung bezieht sich auch auf eine Vorrichtung zur Durchführung des Verfahrens und einen Sensor, welcher eine optisch-wellenleitende Schicht mit integriertem optischen Beugungsgitter umfasst, sowie auf die Verwendung solcher Sensoren.

Die Messung von spektroskopischen, physikalischen Grössen in unmittelbarer Nähe einer Sensoroberfläche mit Hilfe von optischen Oberflächenwellen ist bekannt. In jüngster Zeit gewinnen Anwendungen dieser Methodik im Bereich der Bioanalytik und Biosensorik zunehmend an Bedeutung. Diese neuen optischen Analyseverfahren beruhen auf der Wechselwirkung der Oberflächenwelle mit den nachzuweisenden Molekülen. Der Nachweis von Substanzen an der Sensoroberfläche erfolgt z.B. durch Messen von Veränderungen der Brechzahl und/oder der optischen Absorption.

Optische Oberflächenwellen sind geführte Lichtwellen, welche sich in oder auf einer wellenleitenden Schichtstruktur entlang einer Oberfläche ausbreiten. Die optische Wellenleitung kann z.B. mit einem Schichtwellenleiter erfolgen. Der Schichtwellenleiter besteht aus einer dünnen, optischwellenleitenden Schicht auf einem planaren Substrat. Alternativ kann die wellenleitende Schichtstruktur aus einer dünnen Metallschicht auf einem Trägersubstrat bestehen. In diesem Fall stellt das sog. Oberflächenplasmon an der Grenzfläche zwischen Metallschicht und Probe die Oberflächenwelle dar.

Hohe, oberflächenspezifische Detektionsempfindlichkeit lässt sich erreichen durch Verwendung von sehr dünnen Schichtwellenleitern mit sehr hoher Brechzahl. Die Dicke der wellenleitenden Schicht liegt dabei deutlich unterhalb der Wellenlänge der geführten Lichtwelle. Die Brechzahl der wellenleitenden Schicht sollte so hoch wie möglich, typischerweise höher als 2, sein.

Für das Ein- und Auskoppeln von kohärentem Licht in den bzw. aus dem Schichtwellenleiter ist es bekannt, ein oder mehrere optische Beugungsgitter, sog. Gitterkoppler, zu verwenden (siehe z.B. DE 37 23 159). Vorteilhaft ist die Verwendung eines bidiffraktiven Gitterkopplers (siehe z.B. Appl. Phys. Lett. 62(13), 1460-62 (1993) oder EP 0 455 067). Der bidiffraktive Gitterkoppler bewirkt eine Richtungsseparation zwischen dem zu detektierenden, ausgekoppelten Licht und den reflektierten, respektive transmittierten Anteilen des einfallenden Lichtstrahls. Dies ermöglicht es, das Licht der Oberflächenwelle nach der Auskopplung hintergrundfrei zu detektieren.

Durch Messen der effektiven Brechzahl der geführten Oberflächenwelle lassen sich Aenderungen der Brechzahl in unmittelbarer Nähe der wellenleitenden Schicht mit hoher Empfindlichkeit nachweisen. Auf diesem Messprinzip beruhen bekannte Verfahren zur Untersuchung von Bindungsreaktionen zwischen sog. Rezeptormolekülen und Molekülen, welche spezifisch an die auf der Wellenleiteroberfläche immobilisierten Rezeptormoleküle binden. Auf diese Weise lassen sich molekulare Wechselwirkungen (z.B. Bindungsreaktionen, Sorptionsvorgänge) analysieren. Die Messung kann dabei durch Bestimmung der relativen Phasenlage einer Meßwelle und einer dazu kohärenten Referenzwelle mittels Interferenz erfolgen (siehe z.B. WO 89/07756 und DE 37 23 159).

In EP 0 455 067 erfolgt die Auskopplung einer TE- und einer TM-Welle mittels eines Gitters aus einem Wellenleiter. Auschließend werden beide Moden zwecks Bestimmung der Phasendifferenz mittels eines Polarisators auf einem Detektor überlagert.

Zum Stand der Technik gehört ebenfalls die Bestimmung der effektiven Brechzahl der geführten Oberflächenwelle durch Messen des Koppelwinkels (siehe z.B. EP 0 482 377, WO 86/07149 oder WO 91/10122). Die Bestimmung der effektiven Brechzahl der geführten Oberflächenwelle durch Messen des Koppelwinkels stellt sehr hohe Anforderungen an die Planarität des Schichtwellenleiters. Ausserdem stellen diese bekannten Verfahren zur Detektion von Molekülen an Sensoroberflächen sehr hohe Anforderungen an die Stabilität der Winkelmessung und an die Kontrolle der Lage des Schichtwellenleiters relativ zur Messeinrichtung. Diese hohen Anforderungen sind im Hinblick auf einen breiten Einsatz der Messmethode als Nachteil anzusehen.

WO 93/01487 und SPIE, 5th EUROPEAN CONFERENCE ON INTEGRATED OPTICS, Bd. 1141, S. 192-200 (1989) zeigen zwei Ansätze zur Behebung dieses Nachteils. In beiden Fällen wird licht entlang seines Ausbreitungsweges kontinuierlich ausgekoppelt und auf einen ortsauflösenden Detektor abgebildet. Im ersten Fall befindet sich der Detektor in der Bildebene, im zweiten Fall in der Fourierebene. In manchen Fällen wird (indirekt) der Koppelwinkel gemessen.

Ein Verfahren zur Herstellung von hochbrechenden Schichtwellenleitern auf prägbaren planaren Kunststoffsubstraten ist in der deutschen Patentanmeldung P 42 28 853.3 beschrieben. Dieses Verfahren bietet den Vorteil, dass sich durch Prägen des Substrates kostengünstig ein optisches Gitter für die Einkopplung bzw. Auskopplung von Licht herstellen lässt.

Aufgabe der Erfindung ist es, ein hochempfindliches Verfahren zur Messung der Ausbreitungseigenschaften optischer Oberflächenwellen zur

Verfügung zu stellen, welches für die Analyse von Substanzen auf Sensoroberflächen geeignet ist, eine wirtschaftliche Herstellung der Sensorelemente erlaubt, und einfache Handhabbarkeit des Sensors in der Anwendung gewährleistet.

Diese Aufgabe wird mit einem optischen Verfahren gelöst, das sich durch die in den Patentansprüchen definierten Merkmale auszeichnet.

Die Abbildung des ausgekoppelten Wellenfeldes kann mit einer sphärischen oder mit einer zylindrischen Linse erfolgen. Anstelle der Linse kann auch ein Linsensystem, eine Fresnellinse oder eine holographische Linse verwendet werden.

Durch die Abbildung werden verschiedene Orte auf der wellenleitenden Schicht definierten Orten in der Detektionsebene zugeordnet. Der Gitterkoppler sorgt dafür, dass die geführten Lichtwellen auf ihrem Ausbreitungsweg kontinuierlich ausgekoppelt werden. Durch Abbilden des ausgekoppelten Wellenfeldes auf einen ortsauflösenden Detektor lässt sich die Ausbreitung der geführten Lichtwellen in der Ebene der wellenleitenden Schicht erfassen. Die Lichtverteilung des ausgekoppelten Wellenfeldes in der Ebene der wellenleitenden Schicht ist charakteristisch für die Ausbreitungseigenschaften der geführten Lichtwellen. Die Lichtverteilung in der Detektionsebene ist ein Abbild der Lichtverteilung des ausgekoppelten Wellenfeldes in der Ebene der wellenleitenden Schicht und wird zur Bestimmung der analytischen Messgrösse verwendet.

Das erfindungsgemässe Verfahren mit einer Abbildung des ausgekoppelten Wellenfeldes in die Detektionsebene eignet sich für wellenleitende Schichtstrukturen auf im wesentlichen planaren Substraten. Die Abbildung bietet den Vorteil, dass die Ausbreitungseigenschaften der geführten Lichtwellen direkt gemessen werden können. Die Koppelwinkel der ausgekoppelten Lichtstrahlen werden bei der Abbildung nicht erfasst. Geringe Abweichungen der wellenleitenden Schichtstruktur von der Planarität spielen für die Messwerterfassung keine Rolle. Diese Eigenschaft des Messverfahrens vereinfacht die Herstellung der Sensoren erheblich.

Ein zusätzlicher Vorteil der Abbildung besteht darin, dass kleine Lageänderungen der wellenleitenden Schichtstruktur relativ zum Messsystem in erster Näherung keinen Einfluss auf die gemessene Lichtverteilung des Wellenfeldes in der Detektionsebene haben. Diese Eigenschaft des Messverfahrens vereinfacht die Handhabung der Sensoren während der Messung.

Das erfindungsgemässe Verfahren erlaubt es, mehrere geführte Lichtwellen simultan in der Detektionsebene abzubilden. Dabei wird eine der geführten Lichtwellen als Referenzwelle verwendet. Gemessen wird z.B. der Unterschied der Ausbreitungseigenschaften zwischen Messwelle und Referenzwelle.

Für den Vergleich der Ausbreitungseigenschaften von Messwelle und Referenzwelle hat sich das folgende Messverfahren überraschenderweise als vorteilhaft erwiesen: Die Oberfläche der wellenleitenden Schicht wird in definierten, streifenförmigen Bereichen mit einer Deckschicht aus einem Material niedriger Brechzahl versehen. Ein Lichtstrahl wird z.B. mit einem Gitterkoppler in den Schichtwellenleiter eingekoppelt, so dass die Ausbreitungsrichtung der geführten Lichtwelle parallel zu den mit der Deckschicht versehenen streifenförmigen Bereichen des Wellenleiters verläuft. Durch die Deckschicht wird ein Teil der geführten Lichtwelle von der Probe auf der Sensoroberfläche abgeschirmt. Der Teil der geführten Lichtwelle, welcher sich ausserhalb der streifenförmigen Bereiche des Wellenleiters mit Deckschicht ausbreitet, tritt mit den nachzuweisenden Molekülen an der Sensoroberfläche in Wechselwirkung und dient als Messwelle. Der Teil der geführten Lichtwelle, welcher sich innerhalb der streifenförmigen Bereiche des Wellenleiters mit Deckschicht ausbreitet, dient als Referenzwelle. Die Ausbreitungswege von Messwelle und Referenzwelle verlaufen parallel nebeneinander. Durch das Aufbringen der Deckschicht wird die wellenleitende Schichtstruktur so verändert, dass sich die effektiven Brechzahlen von Messwelle und Referenzwelle geringfügig voneinander unterscheiden.

Messwelle und Referenzwelle werden mit einem Gitterkoppler ausgekoppelt, und das ausgekoppelte Wellenfeld wird mit einer zylindrischen Optik auf die Detektionsebene abgebildet. Die Zylinderachse der Abbildungsoptik steht dabei senkrecht zur Ausbreitungsrichtung von Messwelle und Referenzwelle. Die beiden Anteile des Wellenfeldes, welche durch Auskoppeln von Messwelle und Referenzwelle entstehen, werden durch die eindimensionale Abbildung der zylindrischen Optik überlagert. Dabei entsteht ein streifenförmiges Interferenzmuster in der Detektionsebene. Die Periodizität des Interferenzmusters in der Detektionsebene ist durch die Differenz der effektiven Brechzahlen von Messwelle und Referenzwelle und durch den Abbildungsmassstab gegeben. Durch Auswerten der räumlichen Periodizität des Interferenzmusters, z.B. durch Fouriertransformation der gemessenen Lichtintensitätsverteilung in der Detektionsebene, lässt sich der relative Phasenverlauf von Messwelle und Referenzwelle mit sehr grosser Genauigkeit messen. Auf diese Weise lassen sich Aenderungen der Brechzahl in unmittelbarer Nähe der wellenleitenden Schicht erfassen und der analytischen Messgrösse zuordnen.

Durch Aufbringen einer Deckschicht aus SiO auf dünne Wellenleiter mit hoher Brechzahl lässt sich erreichen, dass der Unterschied zwischen den effektiven Brechzahlen von Messwelle und Referenzwelle in einen Bereich zu liegen kommt, welcher eine Auswertung des Interferenzmusters in der Detektionsebene mit einer Diodenzeile ermöglicht. Bei einem Abbildungsmassstab 1:1 von der wellenleitenden Schicht auf die Detektionsebene liegt die Periodenlänge des Interferenzmusters typischerweise zwischen ca. 20 - 100 Mikrometer.

Eine zweite analytische Messgrösse erhält man durch Messen der Lichtintensität in der Detektionsebene. Die gemittelte Intensität und/oder der Abfall der Intensität in Ausbreitungsrichtung der geführten Lichtwelle gibt Aufschluss über die Dämpfung (Extinktion) der optischen Oberflächenwelle.

Eine alternative Methode für den Vergleich der Ausbreitungseigenschaften von zwei geführten Lichtwellen ist das folgende Messverfahren: Zwei zueinander kohärente Lichtstrahlen werden z.B. mit einem Gitterkoppler in den Schichtwellenleiter eingekoppelt, wobei einer der Lichtstrahlen den transversal elektrisch (TE) polarisierten Mode des Wellenleiters anregt und der andere Lichtstrahl den transversal magnetisch (TM) polarisierten Mode des Wellenleiters anregt. Die Ausbreitungswege der beiden Moden verlaufen parallel nebeneinander oder gemeinsam auf demselben Weg. Für dünne Wellenleiter mit hoher Brechzahl ist die Wechselwirkung des TE-polarisierten Modes und des TM-polarisierten Modes mit den nachzuweisenden Molekülen auf der Wellenleiteroberfläche deutlich verschieden. Die effektiven Brechzahlen des TE-Modes und des TM-Modes weisen einen beträchtlichen Unterschied auf, die Periodenlänge der räumlichen Schwebung der beiden Moden ist typischerweise kleiner als 5 Mikrometer.

Durch Verwendung eines bidiffraktiven Gitterkopplers lässt sich der relative Phasenverlauf des TE-Modes und des TM-Modes auf einfache Weise messen. Dazu wird die wellenleitende Schicht im Bereich der Ausbreitungswege der beiden Moden mit einem bidiffraktiven Gitterkoppler mit geeignet gewählten Periodenlängen der beiden Gitterkomponenten versehen. Der TE-Mode wird über die Gitterkomponente mit der kürzeren Periode ausgekoppelt, der TM-Mode wird über die Gitterkomponente mit der längeren Periode ausgekoppelt. Das ausgekoppelte Wellenfeld wird auf die Detektionsebene abgebildet. Dazu kann eine spärische oder eine zylindrische Abbildungsoptik verwendet werden. Die beiden Anteile des Wellenfeldes, welche durch Auskoppeln des TE-Modes und des TM-Modes entstehen, werden durch einen Polarisator zur Interferenz gebracht, wobei ein streifenförmiges Interferenzmuster in der Detektionsebene entsteht. Die Periodizität des Interferenzmusters in der Detektionsebene ist durch die Differenz der effektiven Brechzahlen des TE-Modes und des TM-Modes, durch die Differenz der Periodenlängen der beiden Gitterkomponenten des bidiffraktiven Gitterkopplers und durch den Abbildungsmassstab gegeben. Durch Auswerten der räumlichen Periodizität des Interferenzmusters, z.B. durch Fouriertransformation der gemessenen Intensitätsverteilung in der Detektionsebene, lässt sich der relative Phasenverlauf des TE-Modes und des TM-Modes mit sehr grosser Genauigkeit messen. Auf diese Weise lassen sich Aenderungen der Brechzahl in unmittelbarer Nähe der wellenleitenden Schicht erfassen und der analytischen Messgrösse zuordnen.

Optische Beugungsgitter für die Einkopplung und die Auskopplung von Licht in den bzw. aus dem Schichtwellenleiter können sich sowohl über begrenzte Regionen der wellenleitenden Schicht, als auch vollflächig über die gesamte wellenleitende Schicht erstrecken. Die vollflächige Ausbildung der Koppelgitter hat den Vorteil, dass eine aufwendige Justage bei der Ein- bzw. Auskopplung des Lichts entfällt.

Insbesondere bei Verwendung des erfindungsgemässen Verfahrens in der optischen Oberflächensensorik und Biosensorik ist die Verwendung eines vollflächig ausgebildeten, bidiffraktiven Gitterkopplers vorteilhaft. Der bidiffraktive Gitterkoppler ermöglicht es, in der wellenleitenden Schicht geführtes Licht nach der Auskopplung hintergrundfrei zu detektieren, obwohl die Regionen auf der wellenleitenden Schicht, in denen das Ein- und Auskoppeln der geführten Lichtwelle erfolgt, teilweise überlappen. Die Verwendung eines vollflächig ausgebildeten, bidiffraktiven Gitterkopplers bietet den Vorteil translationsinvarianter Koppeleffizienz.

Der vollflächig ausgebildete, bidiffraktive Gitterkoppler lässt sich sowohl für die Einkopplung, als auch für die Auskopplung der beiden Moden verwenden. Dabei wird der TE-Mode über die Gitterkomponenten mit der längeren Periode eingekoppelt und über die Gitterkomponenten mit der kürzeren Periode ausgekoppelt. Der TM-Mode wird über die Gitterkomponente mit der kürzeren Periode eingekoppelt und über die Gitterkomponente mit der längeren Probe ausgekoppelt.

Auch bei Verwendung des erfindungsgemässen Verfahrens mit einer Messwelle und mit einer Referenzwelle, wobei sich die Referenzwelle in streifenförmigen Bereichen des Wellenleiters mit Deckschicht ausbreitet, erfolgen Einkopplung und Auskopplung vorzugsweise mit einem vollflächig ausgebildeten, bidiffraktiven Gitterkoppler. Die Einkopplung von Messwelle und Referenzwelle erfolgt z.B. über die Gitterkomponente mit der längeren Periode und die Auskopplung von Messwelle und Referenzwelle über die Gitterkomponente mit der kürzeren Periode. Die Periodenlängen der beiden Gitterkomponenten des bidiffraktiven Gitterkopplers werden so gewählt, dass das ausgekoppelte Wellenfeld in die Apertur der Abbildungsoptik fällt und der Winkelbereich für die einfallenden Lichtstrahlen neben die Abbildungsoptik zu liegen kommt.

Die Eigenschaft der Translationsinvarianz der Koppeleffizienz lässt sich auch erreichen bei Verwendung des erfindungsgemässen Verfahrens mit einer Messwelle und einer Referenzwelle, bei dem sich die Referenzwelle in streifenförmigen Bereichen des Wellenleiters ausbreitet, welche mit einer Deckschicht versehen sind. Dazu wird die Deckschicht in Form eines Rasters von schmalen parallelen Streifen auf die wellenleitende Schicht aufgebracht. Die Gitterlinien des bidiffraktiven Gitterkopplers sind mit Vorteil senkrecht zu den mit der Deckschicht versehenen streifenförmigen Bereichen des Wellenleiters orientiert. Die Ausbreitungsrichtungen von Messwelle und Referenzwelle verlaufen parallel zu den streifenförmigen Bereichen mit Deckschicht. Breite und Abstand der streifenförmigen Bereiche mit Deckschicht sind grösser als die Lichtwellenlänge und kleiner als die Ausdehnung der geführten Lichtwelle senkrecht zur Ausbreitungsrichtung. Der Teil der geführten Lichtwelle, welcher sich zwischen den streifenförmigen Bereichen mit Deckschicht ausbreitet, dient als Messwelle. Der Teil der geführten Lichtwelle, welcher sich innerhalb der streifenförmigen Bereiche mit Deckschicht ausbreitet, dient als Referenzwelle. Messwelle und Referenzwelle werden über das bidiffraktive Gitter ausgekoppelt, und das ausgekoppelte Wellenfeld wird mit einer zylindrischen Optik auf die Detektionsebene abgebildet. Die Zylinderachse der Abbildungsoptik steht senkrecht zu den streifenförmigen Bereichen mit Deckschicht. Die beiden Anteile des Wellenfeldes, welche durch Auskoppeln von Messwelle und Referenzwelle entstehen, werden durch die eindimensionale Abbildung der zylindrischen Optik überlagert. Dabei entsteht ein streifenförmiges Interferenzmuster in der Detektionsebene. Die räumliche Periodizität des Interferenzmusters in der Detektionsebene lässt sich ebenfalls mit grosser Genauigkeit messen und der analytischen Messgrösse zuordnen.

Die Einfallswinkel der Lichtstrahlen sind so zu wählen, dass die Koppelbedingung erfüllt ist. Durch eine leichte Fokussierung der einfallenden Strahlen wird eine Verbreiterung der Resonanzkurve für die Kopplung erreicht, so dass eine aufwendige Justage bei der Einkopplung des Lichts entfällt.

Die Einstellung der Einfallswinkel für die Kopplung erfolgt z.B. mit einem geeigneten Strahlführungssystem. Eine alternative Methode für die Einstellung der Einfallswinkel besteht darin, konvergente Strahlbündel anzubieten und mit Spaltblenden schmale Teilbündel der konvergenten Strahlenbündel auszublenden. Die Lage der Spaltblende im konvergenten Strahlenbündel bestimmt den Einfallswinkel für die Kopplung der geführten Lichtwelle.

Mit einer Zeile räumlich adressierbarer Blenden lässt sich die Einstellung der Einfallswinkel ohne Verwendung von beweglichen Teilen durchführen.
Die Zeile räumlich adressierbarer Blenden für das einfallende Licht kann z.B. aus einer Flüssigkristallzelle mit zeilenförmig angeordneten, stabförmigen Bildelementen bestehen. Die adressierten, auf Lichtdurchlass gestellten Bildelemente der Zeile definieren die für die Kopplung erforderlichen Einfallswinkel.

Im Bereich der Bioanalytik und Biosensorik gewinnen refraktometrische Messungen an Sensoroberflächen mit Hilfe optischer Oberflächenwellen zunehmend an Bedeutung. Mit dieser Methode lässt sich der Verlauf molekularer Wechselwirkungen durch Messen der Veränderung der Brechzahl in unmittelbarer Nähe der Sensoroberfläche untersuchen. Dieses Sensorverfahren lässt sich auch für den Nachweis von Substanzen z.B. in gasförmigen und flüssigen Proben verwenden.

Im folgenden werden anhand der beiliegenden Zeichnungen Ausführungsbeispiel von Vorrichtungen zur Durchführung des erfindungsgemässen Verfahrens beschrieben. Es zeigen in stark schematisierter Darstellung
- Figur 1: einen Schnitt durch eine Vorrichtung zur Analyse von Substanzen an Sensoroberflächen mit Hilfe optischer Oberflächenwellen,
- Figur 2: eine perspektivische Darstellung eines Sensors zur Analyse von Substanzen mit der in Figur 1 gezeigten Vorrichtung,
- Figur 3: einen Schnitt durch eine Vorrichtung zur Messung der örtsabhängigen, relativen Phase des TE polarisierten Modes und des TM polarisierten Modes in einem dünnen Schichtwellenleiter hoher Brechzahl,
- Figur 4: eine perspektivische Darstellung eines Sensors zur Analyse von Substanzen mit der in Figur 3 gezeigten Vorrichtung,
- Figur 5: eine schematische Schnittdarstellung einer Vorrichtung zur Messung der Ausbreitungseigenschaften optischer Oberflächenwellen mit einer Zeile räumlich adressierbarer Blenden für das einfallende Licht.

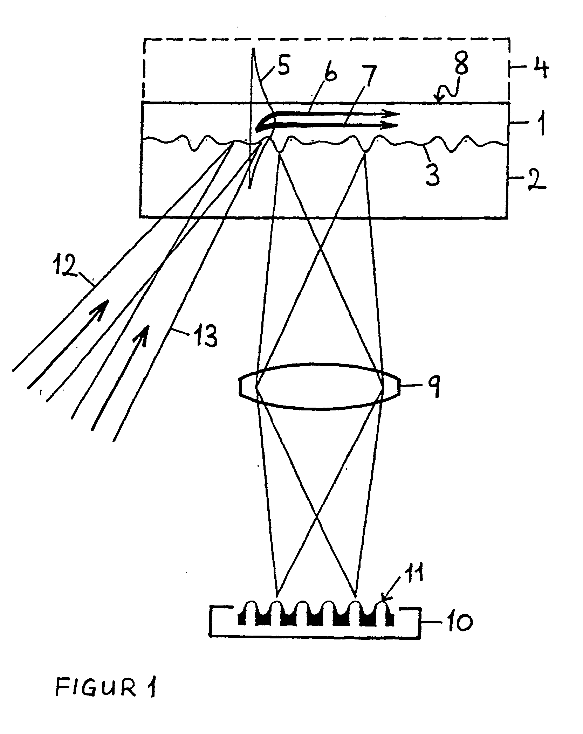

In Figur 1 ist ein Schnitt durch eine Vorrichtung zur Analyse von Substanzen an Sensoroberflächen gezeigt Ein Schichtwellenleiter 1 auf einem planaren Substrat 2 ist mit einem bidiffraktiven Gitterkoppler 3 versehen. Durch eine Deckschicht 4 wird ein Teil einer geführten Lichtwelle 5, die sog. Referenzwelle 6, von der Probe auf der Sensoroberfläche abgeschirmt. Der andere Teil der geführten Lichtwelle 5, die sog. Messwelle 7, tritt mit nachzuweisenden Molekülen auf der Wellenleiteroberfläche 8 in Wechselwirkung. Die Messwelle und die Referenzwelle werden mit dem bidiffraktiven Gitterkoppler ausgekoppelt. Das ausgekoppelte Wellenfeld wird mit einer Zylinderlinse 9 auf einen ortsauflösenden Detektor 10 abgebildet. Dabei ensteht ein räumlich periodisches Interferenzmuster 11 in der Detektionsebene. Durch Auswerten der räumlichen Periodizität des Interferenzmusters, z.B. durch Fouriertransformation der in der Detektionsebene gemessenen Intensitätsverteilung, lässt sich die ortsabhängige, relative Phase von Messwelle und Referenzwelle mit sehr grosser Genauigkeit messen. Auf diese Weise lassen sich Aenderungen der Brechzahl in unmittelbarer Nähe der wellenleitenden Schicht erfassen und der analytischen Messgrösse zuordnen. Die Einfallswinkel der Lichtstrahlen 12 und 13 sind so zu wählen, dass die Koppelbedingung für die Messwelle und die Referenzwelle erfüllt ist. Durch eine leichte Fokussierung der einfallenden Strahlen wird eine Verbreiterung der Resonanzkurve für die Kopplung erreicht, so dass eine aufwendige Justage bei der Einkopplung des Lichts entfällt.

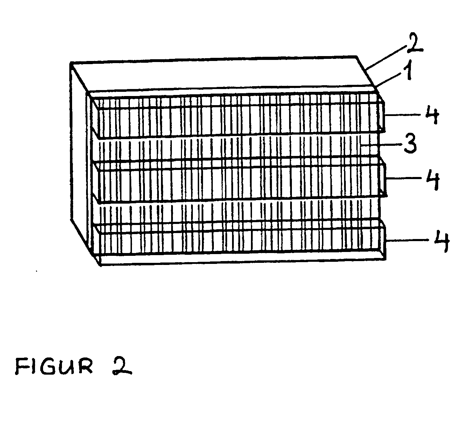

Figur 2 zeigt eine Ausführungsform eines Sensors zur Analyse von Substanzen mit Hilfe der in Figur 1 gezeigten Vorrichtung. Der Sensor umfasst eine optisch-wellenleitende Schicht 1 mit einem vollflächig ausgebildeten, bidiffraktiven Gitterkoppler 3 auf einem planaren Substrat 2. Die Oberfläche der wellenleitenden Schicht ist in parallelen, streifenförmigen Bereichen mit einer Deckschicht 4 aus einem Material mit niedriger Brechzahl versehen. Die Ausbreitungsrichtung der geführten Lichtwelle verläuft parallel zu den mit der Deckschicht versehenen streifenförmigen Bereichen des Wellenleiters. Die Breite der streifenförmigen Bereiche und ihr Abstand sind grösser als die Lichtwellenlänge und kleiner als die Ausdehnung der geführten Lichtwelle senkrecht zur Ausbreitungsrichtung. Der Teil der geführten Lichtwelle, welcher sich zwischen den streifenförmigen Bereichen mit Deckschicht ausbreitet, dient als Messwelle. Der Teil der geführten Lichtwelle, welcher sich innerhalb der streifenförmigen Bereiche mit Deckschicht ausbreitet dient als Referenzwelle.

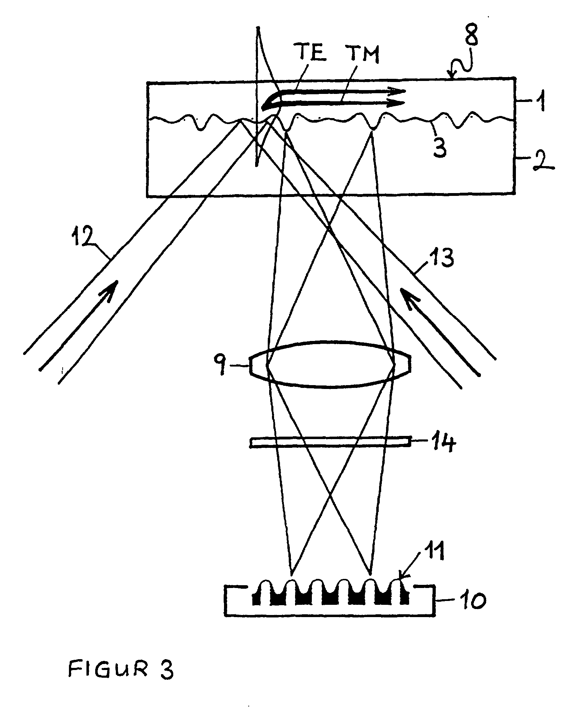

Figur 3 zeigt eine Vorrichtung zur Messung der ortsabhängigen, relativen Phase des TE-polarisierten Modes und des TM-polarisierten Modes in einem dünnen Schichtwellenleiter hoher Brechzahl. Ein Schichtwellenleiter 1 auf einem planaren Substrat 2 ist mit einem bidiffraktiven Gitterkoppler 3 versehen. Zwei zueinander kohärenter Lichtstrahlen 12 und 13 werden mit dem bidiffraktiven Gitterkoppler in den Schichtwellenleiter eingekoppelt, wobei einer der Lichtstrahlen den transversal elektrisch (TE) polarisierten Mode des Wellenleiters und der andere Lichtstrahl den transversal magnetisch (TM) polarisierten Mode des Wellenleiters anregt. Die Ausbreitungswege der beiden Moden verlaufen parallel nebeneinander oder gemeinsam auf demselben Weg. Die Wechselwirkung des TE-polarisierten Modes und des TM-polarisierten Modes mit den nachzuweisenden Molekülen auf der Wellenleiteroberfläche 8 ist deutlich verschieden. Die beiden Moden werden mit dem bidiffraktiven Gitterkoppler ausgekoppelt. Das ausgekoppelte Wellenfeld wird mit der Linse 9 auf einen ortsauflösenden Detektor 10 abgebildet und mit einem Polarisator 14 zur Interferenz gebracht. Dabei entsteht ein räumlich periodisches Interferenzmuster 11 in der Detektionsebene. Durch Auswerten der räumlichen Periodizität des Interferenzmusters, z.B. durch Fouriertransformation der in der Detektionsebene gemessenen Lichtintensitätsverteilung, lässt sich die ortsabhängige, relative Phase der beiden Moden mit sehr grosser Genauigkeit messen. Auf diese Weise lassen sich Aenderungen der Brechzahl in unmittelbarer Nähe der wellenleitenden Schicht erfassen und der analytischen Messgrösse zuordnen.

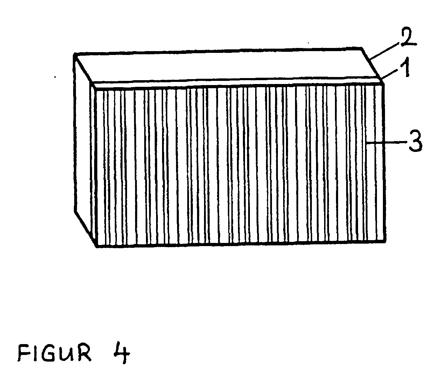

Figur 4 zeigt eine Ausführungsform des Sensors zur Analyse von Substanzen mit Hilfe der in Figur 3 gezeigten Vorrichtung. Der Sensor umfasst eine optisch-wellenleitende Schicht 1 mit einem vollflächig ausgebildeten, bidiffraktiven Gitterkoppler 3 auf einem planaren Substrat 2.

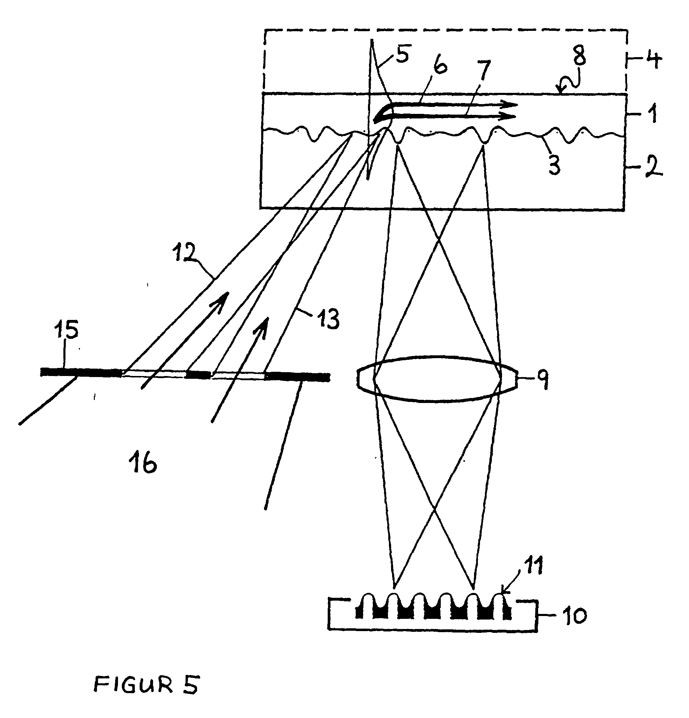

Figur 5 zeigt das Schnittbild einer weiteren Ausführungsform einer Vorrichtung zur Analyse von Substanzen an Sensoroberflächen. Die Einstellung der Winkel der einfallenden Lichtstrahlen erfolgt mit Hilfe einer Zeile 15 von räumlich adressierbaren Blenden im Strahlengang eines konvergenten Strahlenbündels 16. Die adressierten, auf Lichtdurchlass gestellten Blenden der Zeile definieren die Einfallswinkel für die Kopplung. Durch die Blendenöffnungen werden die für die Kopplung geeigneten, leicht fokussierten Teilbündel 12 und 13 aus dem konvergenten Strahlenbündel 16 ausgeblendet.

## Patentansprüche

1. Optisches Verfahren zur Analyse von Substanzen an Sensoroberflächen, bei welchem in einer wellenleitenden Schichtstruktur geführte Lichtwellen mit einem Gitterkoppler auf ihrem Ausbreitungsweg kontinuierlich ausgekoppelt werden, wobei die Koppelregion des Gitterkopplers auf einen ortsauflösenden Detektor abgebildet wird, so dass die Ebene der wellenleitenden Schichtstruktur die Objektebene bildet und die Detektionsebene in der Bildebene der optischen Abbildung liegt, und wobei die bei der Abbildung entstehende Lichtverteilung des ausgekoppelten Wellenfeldes mit dem Detektor gemessen und zur Bestimmung der analytischen Messgrösse verwendet wird, **dadurch gekennzeichnet, dass** die geführten Lichtwellen eine Messwelle und eine Referenzwelle umfassen, die zueinander kohärent sind, und bei der Abbildung des ausgekoppelten Wellenfeldes in der Detektionsebene ein Interferenzmuster entsteht, wobei der relative Phasenverlauf der geführten Lichtwellen gemessen wird.

2. Verfahren nach Anspruch 1, **dadurch gekennzeichnet, dass** die wellenleitende Schichtstruktur eine optisch-wellenleitende Schicht auf einem Trägersubstrat umfasst.

3. Verfahren nach Anspruch 1, **dadurch gekennzeichnet, dass** die wellenleitende Schichtstruktur eine dünne Metallschicht auf einem Trägersubstrat umfasst.

4. Verfahren nach Anspruch 1, **dadurch gekennzeichnet, dass** die Einkopplung der geführten Lichtwellen mit einem Gitterkoppler erfolgt.

5. Verfahren nach Anspruch 1, **dadurch gekennzeichnet, dass** die Einkopplung und die Auskopplung der geführten Lichtwellen mit einem vollflächig ausgebildeten Gitterkoppler erfolgt.

6. Verfahren nach Anspruch 1, **dadurch gekennzeichnet, dass** die Einkopplung und die Auskopplung der geführten Lichtwellen mit einem vollflächig ausgebildeten, bidiffraktiven Gitterkoppler erfolgt.

7. Verfahren nach Anspruch 1, **dadurch gekennzeichnet, dass** die Auskopplung der geführten Lichtwellen über verschiedene Gitterkomponenten eines bidiffraktiven Gitterkopplers erfolgt.

8. Verfahren nach Anspruch 1, **dadurch gekennzeichnet, dass** die Abbildung des ausgekoppelten Wellenfeldes mit einer sphärischen Linse, einer zylindrischen Linse, einem Linsensystem, einer Fresnellinse oder einer holographischen Linse erfolgt.

9. Verfahren nach Anspruch 1, **dadurch gekennzeichnet, dass** die Lichtverteilung in der Detektionsebene mit einer Diodenzeile gemessen wird.

10. Verfahren nach Anspruch 1, **dadurch gekennzeichnet, dass** sich eine der geführten Lichtwellen in einem Bereich des Wellenleiters mit einer Deckschicht ausbreitet, wobei die Deckschicht durch Abschirmung eines Teils der Lichtwelle eine Referenzwelle erzeugt.

11. Verfahren nach Anspruch 10, **dadurch gekennzeichnet, dass** die Deckschicht aus SiO₂ besteht.

12. Verfahren nach Anspruch 1, **dadurch gekennzeichnet, dass** die geführten Lichtwellen unterschiedliche Polarisation aufweisen.

13. Verfahren nach Anspruch 1, **dadurch gekennzeichnet, dass** sich die geführten Lichtwellen parallel nebeneinander oder auf demselben Weg ausbreiten.

14. Verfahren nach wenigstens einem der Ansprüche 1 bis 13, **dadurch gekennzeichnet, dass** der Unterschied der Ausbreitungseigenschaften der geführten Lichtwellen gemessen wird.

15. Verfahren nach Anspruch 1, **dadurch gekennzeichnet, dass** sich im Strahlengang der Abbildungsoptik ein Polarisator befindet.

16. Verfahren nach Anspruch 1, **dadurch gekennzeichnet, dass** die Periodizität des Interferenzmusters zur Bestimmung der analytischen Messgrösse verwendet wird.

17. Verfahren nach Anspruch 13, **dadurch gekennzeichnet, dass** für die Abbildung des ausgekoppelten Wellenfeldes eine zylindrische Optik verwendet wird und, dass die Zylinderachse der Optik senkrecht zur Ausbreitungsrichtung der geführten Lichtwellen orientiert ist.

18. Verfahren nach Anspruch 13, **dadurch gekennzeichnet, dass** in der Detektionsebene der Abfall der Lichtintensität in Ausbreitungsrichtung der geführten Lichtwellen gemessen wird.

19. Verfahren nach Anspruch 4, **dadurch gekennzeichnet, dass** die Einstellung der Einfallswinkel für die Kopplung der einfallenden Lichtstrahlen mit einem Strahlführungssystem erfolgt.

20. Verfahren nach Anspruch 4, **dadurch gekennzeichnet, dass** die Einstellung der Winkel der einfallenden Lichtstrahlen mit Spaltblenden im Strahlengang eines konvergenten Strahlenbündels erfolgt.

21. Verfahren nach Anspruch 20, **dadurch gekennzeichnet, dass** die Einstellung der Winkel der einfallenden Lichtstrahlen mit einer Zeile räumlich adressierbarer Blenden erfolgt.

22. Verfahren nach Anspruch 21, **dadurch gekennzeichnet, dass** die Zeile räumlich adressierbarer Blenden aus einer Flüssigkristall-Drehzelle mit zeilenförmig angeordneten, Bildelementen besteht.

## Claims

1. Optical method for analysing substances on sensor surfaces in which light waves guided in a wave-guiding layer structure are continuously coupled out on their propagation path using a grating coupler, the coupling region of the grating coupler is formed on a position-resolving detector such that the plane of the wave-guiding layer structure forms the object plane and the detection plane is in the image plane of the optical image and the light distribution of the coupled-out wave field formed by the imaging is measured by the detector and used to determine the measured analytical quantity, **characterized in that** the guided light waves comprise a measurement wave and a reference wave which are coherent to one another and when an image of the coupled-out electromagnetic field is formed in the detection plane, an interference pattern is produced and the relative phase pattern of the guided light waves is measured.

2. Method as claimed in claim 1, **characterized in that** the wave-guiding layer structure comprises an optical wave-guiding layer on a support substrate.

3. Method as claimed in claim 1, **characterized in that** the wave-guiding layer structure comprises a thin metal layer on a support substrate.

4. Method as claimed in claim 1, **characterized in that** the guided light waves are coupled in using a grating coupler.

5. Method as claimed in claim 1, **characterized in that** the guided light waves are coupled in and out using a grating coupler which is formed over the whole area.

6. Method as claimed in claim 1, **characterized in that** the guided light waves are coupled in and out using a bidiffractive grating coupler which is formed over the whole area.

7. Method as claimed in claim 1, **characterized in that** the guided light waves are coupled out by means of various grating components of a bidiffractive grating coupler.

8. Method as claimed in claim 1, **characterized in that** an image of the coupled-out electromagnetic field is formed using a spherical lens, a cylindrical lens, a lens system, a Fresnel lens or a holographic lens.

9. Method as claimed in claim 1, **characterized in that** the light distribution in the detection plane is measured with a row of diodes.

10. Method as claimed in claim 1, **characterized in that** one of the guided light waves propagates in a region of the waveguide with a cover layer, whereby the cover layer generates a reference wave by shielding part of the light wave.

11. Method as claimed in claim 10, **characterized in that** the cover layer is composed of SiO₂.

12. Method as claimed in claim 1, **characterized in that** the guided light waves have a different polarization.

13. Method as claimed in claim 1, **characterized in that** the guided light waves propagate in parallel next to one another or on the same path.

14. Method as claimed in at least one of the claims 1 to 13, **characterized in that** the difference in the propagation properties of the guided light waves is measured.

15. Method as claimed in claim 1, **characterized in that** a polarizer is located in the optical path of the imaging optics.

16. Method as claimed in claim 1, **characterized in that** the periodicity of the interference pattern is used to determine the measured analytical quantity.

17. Method as claimed in claim 13, **characterized in that** cylindrical optics is used to form an image of the coupled-out electromagnetic field and the cylinder axis of the optics is orientated perpendicular to the direction of propagation of the guided light waves.

18. Method as claimed in claim 13, **characterized in that** the decrease in the light intensity in the direction of propagation of the guided light waves is measured in the detection plane.

19. Method as claimed in claim 4, **characterized in that** the angle of incidence for coupling the incident light rays is adjusted with a beam guidance system.

20. Method as claimed in claim 4, **characterized in that** the angle of the incident light rays is adjusted with slit apertures in the optical path of a convergent bundle of rays.

21. Method as claimed in claim 20, **characterized in that** the angle of the incident light rays is adjusted with a row of spatially addressable apertures.

22. Method as claimed in claim 21, **characterized in that** the row of spatially addressable apertures comprises a liquid crystal rotary cell with image elements arranged in rows.

## Revendications

1. Procédé optique pour l'analyse de substances sur des surfaces de capteurs, au cours duquel des ondes lumineuses guidées dans une couche structurelle conductrice d'ondes sont extraites de manière continue sur leur parcours de diffusion/propagation à l'aide d'un coupleur à réseau, où la zone de couplage du coupleur à réseau est projetée/reproduite sur un détecteur à séparation localisée, de manière à ce que la surface de la couche structurelle conductrice d'ondes forme le plan de l'objet, que le plan de détection se situe dans le plan image de la reproduction optique, et où la diffusion de lumière générée sur la reproduction du champ d'ondes extrait est mesurée au moyen du détecteur pour être utilisée à déterminer une grandeur de mesure analytique, **caractérisé en ce que** les ondes lumineuses guidées comprennent une onde de mesure et une onde de référence, cohérentes entre elles, et qu'une figure d'interférence est générée au niveau de la surface/couche/plan de détection lors de la reproduction du champ d'ondes extrait et où le mouvement de phase relatif des ondes lumineuses guidées est mesuré.

2. Procédé selon la revendication 1, **caractérisé en ce que** la couche structurelle conductrice d'ondes comporte une couche conductrice d'ondes optique sur un substrat support.

3. Procédé selon la revendication 1, **caractérisé en ce que** la couche structurelle conductrice d'ondes comporte une mince couche métallique sur un substrat support.

4. Procédé selon la revendication 1, **caractérisé en ce que** l'injection des ondes lumineuses guidées est réalisée au moyen d'un coupleur à réseau.

5. Procédé selon la revendication 1, **caractérisé en ce que** l'injection et l'extraction des ondes lumineuses guidées sont réalisées au moyen d'un coupleur à réseau holoédrique.

6. Procédé selon la revendication 1, **caractérisé en ce que** le couplage et le découplage des ondes lumineuses conduites sont réalisés au moyen d'un coupleur à réseau holoédrique à double diffraction.

7. Procédé selon la revendication 1, **caractérisé en ce que** l'extraction des ondes lumineuses guidées est réalisée grâce à différents composants de réseau d'un coupleur à réseau à double diffraction.

8. Procédé selon la revendication 1, **caractérisé en ce que** la projection du champ d'ondes extrait est réalisée au moyen d'une lentille sphérique, d'une lentille cylindrique, d'un système de lentilles, d'une lentille Fresnel ou d'une lentille holographique.

9. Procédé selon la revendication 1, **caractérisé en ce que** la diffusion de la lumière dans le plan de détection est mesurée au moyen d'une rangée de diodes.

10. Procédé selon la revendication 1, **caractérisé en ce que** l'une des ondes de lumière guidées se propage dans une région du guide d'ondes doté d'une couche de recouvrement, où ladite couche de recouvrement génère une onde de référence de par l'écran formé sur une partie de l'onde lumineuse.

11. Procédé selon la revendication 10, **caractérisé en ce que** la couche de recouvrement est en SiO₂.

12. Procédé selon la revendication 1, **caractérisé en ce que** les ondes guidées possèdent une polarisation différente.

13. Procédé selon la revendication 1, **caractérisé en ce que** les ondes guidées se propagent de manière parallèle ou sur la même trajectoire.

14. Procédé selon au moins l'une des revendication 1 à 13, **caractérisé en ce que** la différence des propriétés de propagation des ondes lumineuses guidées est mesurée.

15. Procédé selon la revendication 1, **caractérisé en ce que** dans le faisceau de l'optique de projection se trouve un polariseur.

16. Procédé selon la revendication 1, **caractérisé en ce que** la périodicité de la figure d'interférence est utilisée pour déterminer la grandeur de mesure analytique.

17. Procédé selon la revendication 13, **caractérisé en ce qu'**une optique cylindrique est utilisée pour la projection du champ d'ondes extrait et que l'axe du cylindre optique est orienté perpendiculairement à la direction de propagation des ondes lumineuses guidées.

18. Procédé selon la revendication 13, **caractérisé en ce que** la diminution de l'intensité lumineuse dans la direction de propagation des ondes lumineuses guidées est mesurée dans le plan de détection.

19. Procédé selon la revendication 4, **caractérisé en ce que** le réglage de l'angle d'incidence pour le couplage des ondes lumineuses entrantes est réalisé au moyen d'un système de guidage de faisceaux.

20. Procédé selon la revendication 4, **caractérisé en ce que** le réglage des angles d'incidence des faisceaux lumineux entrants est effectué à l'aide de diaphragmes à fentes situés dans la trajectoire d'un faisceau lumineux convergent.

21. Procédé selon la revendication 20, **caractérisé en ce que** le réglage des angles d'incidence des rayons lumineux entrants est réalisé au moyen d'une rangée de diaphragmes adressables dans l'espace.

22. Procédé selon la revendication 21, **caractérisé en ce que** la rangée des diaphragmes adressables dans l'espace est constitué par une cellule rotative à cristaux liquides avec des éléments d'image disposés sous forme de rangée.
